# EUROPÄISCHE PATENTSCHRIFT

(11) **EP 3 289 295 B1**
(45) Veröffentlichungstag und Bekanntmachung des Hinweises auf die Patenterteilung: **12.08.2020**
(21) Anmeldenummer: 16711638.3
(22) Anmeldetag: 23.03.2016
(51) Int. Cl.: F25B 49/02, A47F 3/04, F25D 11/02

(54) **KÜHLREGALVORRICHTUNG**
CHILLER CABINET DEVICE
SYSTÈME D'ÉTAGÈRE RÉFRIGÉRANTE

(30) Priorität: 29.04.2015 DE 102015106620
(43) Veröffentlichungstag der Anmeldung: 07.03.2018
(73) Patentinhaber: AHT Cooling Systems GmbH, 8786 Rottenmann (AT)
(72) Erfinder: RESCH, Reinhold, 8755 St. Peter (AT)
(74) Vertreter: Fleck, Hermann-Josef
(86) Internationale Anmeldenummer: PCT/EP2016/056408
(87) Internationale Veröffentlichungsnummer: WO 2016/173782

(56) Entgegenhaltungen:
- WO-A1-01/79772
- DE-A1-102010 063 384
- US-A- 3 585 814
- US-A1- 2010 257 886

## Beschreibung

Die Erfindung betrifft eine Kühlregalvorrichtung und deren Verwendung mit mindestens einer Einheit aus mehreren Wandgruppen, nämlich einer Bodengruppe, einer Rückwandgruppe und einer Dachgruppe, die einen Kühlraum unten, rückseitig und oben begrenzen, und mit einer Kühleinrichtung, die als Komponenten zumindest einen Verdampfer, einen Verflüssiger und eine elektrische Steuerungseinrichtung umfasst.

Eine Kühlgerätevorrichtung mit einer derartigen Kühleinrichtung ist in der US 2010/257886 A1 gezeigt. Hierbei weist die Kühleinrichtung zwei getrennte Kühlmitteilkreisläufe auf, wobei in dem einen Kühlmittelkreislauf ein Kompressor mit konstanter Drehzahl und in dem anderen Kühlmittelkreislauf ein in seiner Drehzahl geregelter Kompressor angeordnet ist. Der Kompressor mit konstanter Drehzahl wird dann zugeschaltet, wenn die von dem Kompressor mit geregelter Drehzahl bereitstellbare Kühlleistung nicht mehr ausreicht bzw. dessen maximale Drehgeschwindigkeit erreicht ist. US 2010/257886 A1 offenbart eine Kühlregalvorrichtung gemäß dem Oberbegriff des Anspruchs 1.

Weitere Kühlgerätevorrichtungen mit mehreren Kühlkreisläufen bzw. einer zuschaltbaren Hilfskühleinrichtung sind in der US 3 585 814 A und der DE 10 2010 063384 A1 gezeigt.

Bei heutigen Kühlvorrichtungen besteht verstärktes Interesse dahingehend, verbreitete konventionelle (in der Regel fluorierte) Kältemittel durch umweltverträglichere, sogenannte natürliche Kältemittel zu ersetzen. Geeignet ist hierzu beispielsweise Kohlendioxid, dessen Einsatz jedoch einen erheblichen anlagentechnischen Aufwand mit sich bringt. Weiterhin haben sich Kohlenwasserstoffe wie Propan oder Butan als gut geeignete Kältemittel herausgestellt, insbesondere aufgrund ihres niedrigen Treibhauspotentials, guter Verfügbarkeit und für ein Kältemittel günstiger thermodynamischer Eigenschaften.

Allerdings weisen Kohlenwasserstoffe eine hohe Zündfreudigkeit auf, sodass bei deren Verwendung als Kältemittel bezüglich Sicherheitsanforderungen restriktive Bestimmungen gelten (z.B. IEC 600335-2-89). Demnach steigen bei einer Füllmenge von größer 150 g Kohlenwasserstoff-Kältemittel pro Kältemittelkreislauf die Sicherheitsanforderungen insbesondere in geschlossenen Räumen beträchtlich, sodass zur Erfüllung dieser Anforderungen ein erheblicher Aufwand erforderlich ist. So besteht insbesondere für benötigte Gesamtmengen in einer Kühlvorrichtung von größer 150g Entwicklungsbedarf, um Kohlenwasserstoffe als klimaschonende Kältemittel effizient einsetzen zu können.

In der WO 01/79772 A1 ist neben anderen Kältemitteln für einen Kühlschrank und kommerzielle Kühlgeräte Propan als Kältemittel genannt.

In der AT 504 774 A1 ist eine Kühl- bzw. Gefrieranlage mit einer Kältemaschine angegeben, die mit einem natürlichen Arbeitsmittel, vorzugsweise Propan- oder Ammoniak, betrieben wird, wobei in einem Wärmetauscher-Kreislauf C0₂ als Wärmeträgermedium zirkuliert. Zum Personenschutz ist vorgeschlagen, die mit C0₂ betriebenen Wärmetauscher-Kreisläufe innerhalb der Räumlichkeit mit Kühlvitrine bzw. Wandregal und die Kältemaschine davon getrennt außerhalb dieser Räumlichkeit anzuordnen.

In der Druckschrift ILK Dresden: Propan als Kältemittel in Kleinkältekreisläufen, URL: http:llwww.ilk dresden.de, ist die Entwicklung eines Mini-Channel-Verdampfers im Zusammenhang mit Wärmepumpen-Wäschetrocknern beschrieben, wobei Ziel ist, die Kältemittel-Füllmenge auf maximal 150 g zu minimieren. Es ist darauf hingewiesen, dass die Verwendung bei Ausführungen mit Verdampfern schwierig ist.

In der DD 2 66 153 D1 ist eine Kälteanlage insbesondere für Kühlfahrzeuge mit zwei oder mehr getrennten Kältemittel-Kreisläufen mit gemeinsamen Verdampfern und Kondensatoren gezeigt, wobei ein Notbetrieb gewährleistet, aber auch eine Ölverschleppung vermieden werden soll. Auf die Verwendung und Probleme im Zusammenhang mit natürlichen Kältemitteln ist nicht näher eingegangen.

Beispiele für generelle Aufbauten von Kühlregalen sind in der DE 10 2012 107 713 A1 und der DE 20 2014 100 665 U1 gezeigt. Bei derartigen Kühlregalen finden herkömmliche Kältemittel Verwendung.

Der Erfindung liegt die Aufgabe zugrunde, eine klimaschonende und effizient betreibbare Kühlregalvorrichtung bereitzustellen.

Diese Aufgabe wird bei der Kühlregalvorrichtung mit den Merkmalen des Anspruchs 1 und bei der Verwendung mit den Merkmalen des Anspruchs 11 gelöst. Bei der Kühlregalvorrichtung ist vorgesehen, dass die Kühleinrichtung mindestens zwei geschlossene, Propan als Kältemittel führende Kältemittelkreisläufe mit jeweils einem Kompressor umfasst und dass zur variablen Regelung der Kühlleistung mindestens ein Kompressor mit einer (die Kühlleistung zum Ausgleich von Schwankungen des Kühlbedarfs regelnden) Drehzahlregelung ausgebildet ist und mindestens ein Kompressor zum Betrieb mit konstanter Drehzahl ausgebildet ist. Durch diese Ausbildung der Kühleinrichtung kann zum einen eine in der Regel ständig benötigte Grundkühlleistung über den mit konstanter Drehzahl betriebenen Kompressor bereitgestellt werden. Ein solcher Kompressor kann somit vorteilhaft relativ wenig aufwändig und daher kostengünstig mit günstiger Betriebsweise ausgeführt sein. Gleichzeitig lassen sich Schwankungen im Kühlleistungsbedarf flexibel und bedarfsoptimiert über den drehzahlregelbaren Kompressor ausgleichen. Auf diese Weise lässt sich eine effizient betreibbare Kühlregalvorrichtung bereitstellen, die durch den Einsatz von Propan als Kältemittel darüber hinaus klimaschonend betreibbar ist.

Gemäß der Erfindung beträgt die Propan-Füllmenge der Kältemittelkreisläufe jeweils ≤ 150 g. Für diesen Füllmengenbereich pro Kältemittelkreislauf bestehen sehr viel geringere Sicherheitsanforderungen an die Kühlregalvorrichtung als bei einer größeren Propan-Füllmenge. So ist die Kühleinrichtung mit weitgehend konventionellen Sicherheitsvorkehrungen betreibbar, wie sie großteils auch mit herkömmlichen Kältemitteln anzuwenden sind. Auf zusätzliche Sicherheitsvorkehrungen kann weitgehend verzichtet werden. Wenn sich der Gesamt-Kältemittelbedarf an Propan zwischen 150 und 300 g bewegt, ist die Kühleinrichtung vorteilhaft mit lediglich zwei Kältemittelkreisläufen betreibbar, wodurch ein einfacheres System erhalten werden kann als mit mehr als zwei Kältemittelkreisläufen.

Für einen effizienten Aufbau ist es vorteilhaft, wenn die Kältemittelkreisläufe einen gemeinsamen Verdampfer aufweisen. Unter dem gemeinsamen Verdampfer ist zumindest ein gemeinsamer Verdampferkörper zum Kühlen des Kühlraums zu verstehen, wobei der Verdampferkörper z.B. ein Wärmetauscher mit Kühllamellen sein kann. Mit dem gemeinsamen Verdampferkörper in Wärmeübertragungsverbindung stehend sind die Leitungen der mindestens zwei geschlossenen Kältemittelkreisläufe geführt, wobei die Kältemittel der beiden Kreisläufe in den Leitungen beispielsweise in Gegenstromanordnung zueinander verlaufen können. Vorzugsweise ist jedem Kältemittelkreislauf stromauf des Verdampferkörpers ein gesondertes Expansionsventil oder eine andere Expansionsvorrichtung zugeordnet. Durch einen derartigen Aufbau lässt sich der Teileaufwand für die Kühlregalvorrichtung verringern, was die Installation vereinfachen und sich zudem günstig auf den Platzbedarf auswirken kann.

In einer weiteren bevorzugten Ausgestaltungsvariante weisen die Kältemittelkreisläufe einen gemeinsamen Verflüssiger und/oder eine gemeinsame elektrische Steuerungseinrichtung zur Steuerung und/oder Regelung von den Kältekreisläufen zugeordneten Komponenten auf. Bei dem gemeinsamen Verflüssiger kann wiederum zumindest ein gemeinsamer Wärmetauscher vorgesehen sein, mit dem die Kältemittelleitungen der jeweils geschlossenen Kreisläufe in Wärmeübertragungsverbindung stehen. Auch durch einen derartigen Aufbau lässt sich der Teileaufwand für die Kühlregalvorrichtung verringern, was die Installation vereinfachen und sich zudem günstig auf den Platzbedarf auswirken kann.

Wenn die elektrische Steuerungseinrichtung zumindest mit dem mit der Drehzahlregelung versehenen Kompressor zur Regelung der Drehzahl in Datenübertragungsverbindung steht, kann der Kompressor über die Steuerungseinrichtung vorteilhaft beispielsweise unter Einbeziehung von Sensoren (z. B. Temperatursensoren und/ oder Drucksensoren) geregelt werden. Die Sensoren sind dabei ebenfalls vorzugsweise mit der Steuerungseinrichtung verbunden, um dieser Sensorsignale zuzuführen, die in die Steuerung oder Regelung einbezogen werden können.

Vorteilhaft kann weiterhin vorgesehen sein, dass die Drehzahl in Abhängigkeit einer mit der Kühlregalvorrichtung in Zusammenhang stehenden Temperatur geregelt oder regelbar ist. Beispielsweise kann eine oder können mehrere Temperatur/en im Kühlraum, z.B. an dem Kühlgut oder bezüglich der Kühlluft ermittelt und an die Steuerungseinrichtung übertragen werden. Denkbar wäre auch, die Temperaturdaten in der Steuerungseinrichtung weiterzuverarbeiten, beispielsweise einen Durchschnittswert zu bilden oder eine andere Kenngröße, nach dem die Drehzahl geregelt wird. Sollte die Regelung nicht über die Steuereinrichtung erfolgen, wäre auch eine Übermittlung einer/mehrerer Temperaturen direkt an den Kompressor denkbar, der ggf. ebenfalls mit einer Regeleinrichtung versehen sein kann. Vorzugsweise wird die Drehzahl des Kompressors zur Erhöhung der Kühlleistung erhöht, wenn eine zu niedrige Temperatur bzw. entsprechende Kennzahl vorliegt und umgekehrt.

Ein platzoptimierter Aufbau ist dadurch erreichbar, dass der Verflüssiger an, in oder auf der Rückwandgruppe oder der Dachgruppe angeordnet ist. Gute Zugangsmöglichkeiten lassen sich zudem dadurch erhalten, dass mindestens einer der Kompressoren und/oder die elektrische Steuerungseinrichtung in oder auf der Dachgruppe angeordnet ist. Dabei kann insbesondere die Anordnung in einem Gehäuse in oder auf der Dachgruppe vorteilhaft sein, welches einen zusätzlichen Schutz vor Umgebungseinflüssen und zugleich eine optische Verdeckung bietet.

In einer vorteilhaften Variante weist der Verflüssiger einen mit Luft gekühlten Wärmetauscher auf, wobei die Luft nach Kühlung des Wärmetauschers vor Ausleitung aus der Kühlregalvorrichtung an mindestens einem Kompressor zu dessen Kühlung vorbeigeführt ist. Auf diese Weise wird eine effiziente Kühlluftführung mit Nutzung der Kühlenergie in der Kühlregalvorrichtung erhalten. Beispielsweise ist dabei ein Strömungskanal von einer Luftleitanordnung auf der Rückseite der Rückwandgruppe im Bereich eines dort angeordneten Verflüssigers zu dem Bereich eines auf der Dachgruppe angeordneten Kompressors und vom dort zur Umgebung ausgebildet.

Wenn die Kühlregalvorrichtung zum Verschließen des Kühlraums auf der der Rückwandgruppe gegenüberliegenden Vorderseite eine Tür aufweist und seitlich von jeweils einer Seitenwandgruppe begrenzt ist, kann der Kühlraum besser gegenüber der wärmeren Umgebung abgegrenzt werden, was zu einem geringeren Energieverbrauch beiträgt.

Ein flexibler Aufbau der Kühlregalvorrichtung kann dadurch erhalten werden, dass die Kühlregalvorrichtung aus mehreren, jeweils eine Einheit aus Wandgruppen aufweisenden Modulen besteht. Diese können z.B. ohne zwischengesetzte Seitenwände aneinandergereiht werden, sodass der durch die Module gebildete Kühlraum einfach durch Hinzufügen bzw. Weglassen einzelner Module in seiner Länge variierbar ist. Ein derartiger Aufbau vereinfacht die Verwendung von standardisierten Bauteilen, was sich wiederum günstig auf die Lagerhaltung von Komponenten der Kühlregalvorrichtung auswirkt.

Besonders klimaschonend und effizient ist die Verwendung einer Kühlregalvorrichtung nach einer der vorhergehenden Ausgestaltungsvarianten bei einer Kühlregalanordnung, die mindestens ein an einer Tragevorrichtung über dem Boden montierbares Kühlregal, insbesondere zum Überbau über einer auf dem Boden stehenden Kühltruhe, aufweist. Ein derartiges Überbauregal bietet die Möglichkeit, eine Verkaufsfläche in vertikaler Richtung zu vergrößern und so besser zu nutzen. Die Verwendung als ein derartiges Überbauregal hat sich in Untersuchungen der Erfinder zum einen wegen des Kühlvolumens solcher Kühlvorrichtungen, zum anderen wegen der Klimatisierungsbedingungen als besonders vorteilhaft herausgestellt. Beispielsweise kann sich bei Überbauregalen mit Längen zwischen 1,2 m und 3 m, vorzugsweise zwischen 1,4 m und 2,6 m ein Kühlraumvolumen ergeben, welches sich durch eine Kühleinrichtung mit zwei Kältemittelkreisläufen mit je einer Propan-Füllmenge von ≤ 150 g für die Kühlung von Kühlgütern geeignet betreiben lässt. Bei einem derartigen Überbauregal kann es z.B. aus nachstehenden Gründen zu größeren Leitungsschwankungen des Kühlleistungsbedarfs kommen. Um ein "Hinausfließen" der kalten und damit dichteren bzw. schwereren Luft aus dem Kühlraum zu verhindern, ist ein derartiges Überbauregal vorzugsweise mit einer bzw. mehreren die Vorderseite verschließenden Tür/en versehen. Wird nun z.B. kundenseitig eine Tür zur Entnahme von Kühlgut geöffnet, entweicht die kalte Luft dennoch aus dem Kühlraum nach unten, wobei warme Umgebungsluft nachströmt. Um anschießend möglichst schnell die erwünschte kalte Temperatur im Kühlraum wieder herzustellen, erhöht sich zeitweise der Kühlleistungsbedarf, der durch eine Drehzahlerhöhung des drehzahlgeregelten Kompressors bereitgestellt werden kann. Neben der Verwendung als

Überbauregal können sich auch Vorteile bei der Verwendung als auf dem Boden aufstehende Kühlregalvorrichtung ergeben.

Die Erfindung wird nachfolgend anhand von Ausführungsbeispielen unter Bezugnahme auf die Zeichnungen näher erläutert. Es zeigen:
- Fig. 1: ein vereinfachtes Fließschema einer Kühleinrichtung mit zwei Kältemittelkreisläufen und einem gemeinsamen Verdampfer und
- Fig. 2: eine Überbauregalanordnung mit mehreren Überbauregalen in perspektivischer Darstellung von oben.

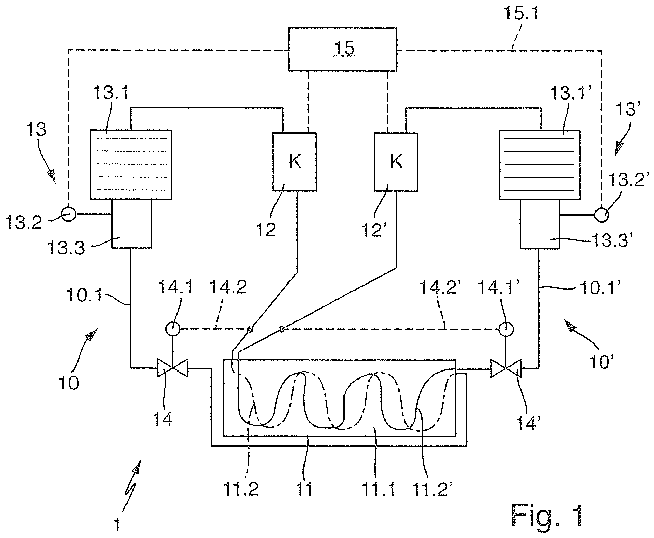

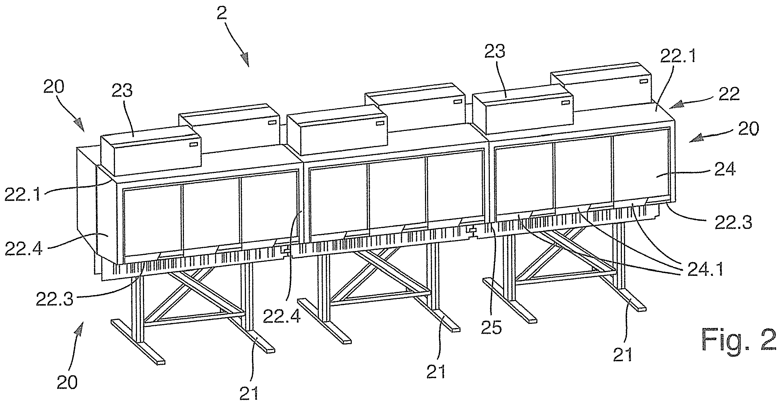

Fig. 1 zeigt ein vereinfachtes Fließschema einer Kühleinrichtung 1 zur Bewerkstelligung der Kühlung des Kühlraums einer Kühlregalvorrichtung 20 (s. Fig. 2). Die Kühleinrichtung 1 weist zwei geschlossene Kältemittelkreisläufe 10, 10' mit Kältemittelleitungen 10.1, 10.1' auf, in denen jeweils Propan als Kältemittel mit einer Füllmenge von bevorzugt ≤ 150 g enthalten ist. Die Füllmengen sind dabei vorzugsweise gleich, können aber auch unterschiedlich groß sein, wobei die Komponenten der Kühleinrichtung 1 auf Propan als Kältemittel mit der entsprechenden Füllmenge ausgelegt sind.

Als Komponenten der Kühleinrichtung 1 sind in den Kältemittelkreisläufen 10, 10' jeweils ein Kompressor 12, 12', stromab davon je ein Verflüssiger 13, 13' mit einem Wärmetauscher 13.1, 13.1', einem Drucksensor 13.2, 13.2' und anschließenden weiteren Verflüssigerkomponenten 13.3, 13.3' (z.B. Sammler, Schauglas etc.) und ein je stromab des Verflüssigers 13, 13' befindliches Expansionsventil 14, 14' angeordnet. Zu Überwachungs- und/oder Regelungszwecken sind den Expansionsventilen 14, 14' jeweils ein Temperatursensor 14.1, 14.1' mit einer Messleitung 14.2, 14.2' zugeordnet, um die Temperatur des Kältemittels stromab eines Verdampfers 11 zu messen. Der Kühleinrichtung 1 weiterhin zugeordnet ist eine Steuerungseinrichtung 15, die mit verschiedenen Komponenten der Kühleinrichtung 1 zu Steuerungs-, Regelungs- und/oder Überwachungszwecken in Datenübertragungsverbindung 15.1 steht.

Auch andere, nicht der Kühleinrichtung 1 zugeordnete Komponenten können mit der Steuerungseinrichtung 15 in Datenübertragungsverbindung 15.1 stehen. Vorliegend ist in der Kühleinrichtung eine gemeinsame Steuerungseinrichtung 15 für beide Kältemittelkreisläufe 10, 10' vorgesehen. Denkbar wären auch separate Teil-Steuerungseinrichtungen, die ihrerseits wieder miteinander in Datenkommunikation gebracht sein können. Weitere, hier nicht gezeigte, Komponenten können in der Kühleinrichtung 1 vorhanden sein, wie beispielsweise verschiedene Sensoren (z.B. Druck-, Temperatursensoren und/oder Durchflussmesser).

Die Kompressoren 12, 12' der Kältemittelkreisläufe 10, 10' dienen jeweils zur Erhöhung des Druckniveaus des Kältemittels in dem Kältemittelkreislauf 10, 10', wobei das bevorzugte Druckniveau mit Propan als Kältemittel zwischen 20 und 30 bar liegt. Die Kompressoren 12, 12' sind unterschiedlich ausgeführt, nämlich einer der Kompressoren 12, 12' drehzahlregelbar bzw. drehzahlgeregelt und einer mit einer statischen Drehzahl betreibbar. Dabei sind die Kompressoren 12, 12' beispielsweise als Hubkolbenverdichter ausgeführt, denkbar sind aber auch andere Verdichtertypen, z.B. Scrollverdichter. Der Kompressor 12 mit statischer Drehzahl liefert eine weitgehend konstante Leistung, mit der insbesondere eine zur Kühlung ständig erforderliche Grundkühlleistung abdeckbar ist. Hierfür kann ein z.B. hinsichtlich der Regelung bzw. Steuerung einfach ausgeführter Verdichter verwendet werden, woraus sich Kostenvorteile ergeben können. Dieser Verdichter kann mit der Steuerungseinrichtung 15 z.B. zu Überwachungszwecken in Datenübertragungsverbindung 15.1 stehen.

Mit dem drehzahlregelbaren Kompressor 12' lassen sich Schwankungen im Kühlleistungsbedarf ausgleichen. Solche Schwankungen können sich beispielsweise durch unterschiedlich hohe Beladungsmengen der Kühlregalvorrichtung 20 mit Kühlgut ergeben, aber auch bei Entnahme von Kühlgut und einem damit verbundenen Verlust von Kaltluft aus dem Kühlraum, sodass in den Kühlraum hinzukommende wärmere Luft innerhalb kurzer Zeit auf die entsprechend vorgegebene Kühltemperatur gebracht werden kann. Über eine Regelung der Drehzahl des drehzahlregelbaren Kompressors 12' lässt sich die Fördermenge des Kältemittels in dem betreffenden Kältemittelkreislauf 10' und auf diese Weise die Kühlleistung des Kältemittelkreislaufs 10' und damit auch der gesamten Kühleinrichtung 1 variieren. Die Regelung erfolgt dabei vorzugsweise über die Steuerungseinrichtung 15 anhand eines oder mehrerer mit der Steuerungseinrichtung 15 ebenfalls in Datenübertagung stehenden Temperatursensors bzw. -sensoren. Diese können beispielsweise die Temperatur der Kühlluft in dem Kühlraum messen und/oder des in den Kreisläufen befindlichen Kältemittels und/oder des Kühlguts. Bei einem höheren Kältebedarf wird über die Regelung der Kompressor-Drehzahl eine höhere Kühlleistung eingestellt und umgekehrt.

Stromab der Kompressoren 12, 12', auf der Hochdruckseite der Kältemittelkreisläufe 10, 10' gelangt das komprimierte Kältemittel jeweils in die Verflüssiger 13, 13'. In vorliegendem Beispiel weisen die Kreisläufe 10, 10' je einen getrennten Verflüssiger 13, 13' auf, d.h. mit zwei Wärmetauschern 13.1, 13.1'. In einem ebenfalls bevorzugten Ausgestaltungsbeispiel ist aber auch ein gemeinsamer Verflüssiger 13, d.h. ein gemeinsamer Wärmetauscher 13.1 abwendbar, mit dem die beiden Kältemittelkreisläufe 10, 10' in thermischer Verbindung stehen. Weitere Komponenten des Verflüssigers 13 wie z.B. der Sammler (hier nicht gezeigt) müssten allerdings auch dann für jeden Kreislauf 10, 10' separat vorgesehen sein, da die Kreisläufe 10, 10' weiterhin in sich geschlossen sind. Die Kältemittelleitungen 10.1, 10.1' sind in thermischem Kontakt zu dem Wärmetauscher 13.1 geführt, um in dem Kältemittel gespeicherte Wärme nach außen abzugeben. Dabei ist der Wärmetauscher beispielsweise luftgekühlt. Denkbar wäre jedoch auch eine Kühlung über ein flüssiges, z.B. Sole/WasserGemisch, um die Wärme aus dem Kältemittel abzutransportieren.

Das nun abgekühlte, flüssige Kältemittel gelangt zu dem jeweiligen Expansionsventilen 14, 14', wo das Kältemittel auf den Verdampfungsdruck, der z.B. etwa 1-2 bar entspricht, entspannt wird. In dem vorliegenden Ausführungsbeispiel sind die Expansionsventile 14, 14' regelbar ausgeführt, wobei sie mit einem Temperatursensor 14.1, 14.1' in Datenübertragungsverbindung 15.1 stehen, der die Kältemitteltemperatur stromab des Verdampfers 11 ermittelt. Die Regelung der Expansionsventile kann dabei ebenfalls über die Steuerungseinrichtung 15 erfolgen.

Anschließend gelangt das Kältemittel in einen nahe an den Expansionsventilen 14, 14' angeordneten Verdampfer 11, der als gemeinsamer Verdampfer 11 der beiden Kreisläufe 10, 10', d.h. mit einem gemeinsamen Verdampferkörper 11.1, ausgeführt ist. Dabei liegen die Zuläufe der Kältemittelleitungen 10.1, 10.1' z.B. an jeweils gleichen Enden des Verdampferkörpers 11.1. Die Kältemittelleitungen sind z.B. mäanderförmig in Kühlschlangen 11.2, 11.2' durch den Verdampferkörper 11.1 so geführt, dass die Fließrichtung der beiden Kreisläufe in einer Art Gleichstromanordnung parallel verläuft. Andere geeignete Anschluss- und Leitungsführungsvarianten sind denkbar, z.B. mit gegenüberliegenden Anschlüssen und gegenläufiger Fließrichtung in einer Art Gegenstromanordnung. Weiterhin wäre auch denkbar, den Kreisläufen 10, 10' jeweils separate Verdampferkörper 11.1 zuzuordnen. Der Verdampferkörper 11.1 weist eine große Kühlfläche auf und steht in thermischem Kontakt zum Kühlraum, um diesem Wärme zu entziehen und über das Kältemittel abzuführen. Das Kältemittel wird in den Kühlschlangen 11.2, 11.2' derart in Kontakt zu dem Verdampferkörper 11.1 geführt, dass die aus dem Kühlraum über den Verdampferkörper 11.1 aufgenommene Wärme an das Kältemittel abgegeben wird. Das Kältemittel wird dabei erwärmt und verdampft. Anschließend wird das Kältemittel jeweils erneut den Kompressoren 12, 12' zugeführt und im Kreislauf geleitet.

Fig. 2 zeigt eine Überbauregalanordnung 2, bei der mehrere, hier sechs Kühlregalvorrichtungen 20 als Überbauregale verwendet sind. Dabei sind jeweils drei Überbauregale mit ihren (aufgrund der Anordnung nicht ersichtlichen) Rückwandgruppen drei weiteren Überbauregale gegenüberliegend angeordnet, wobei jeweils zwei mit ihren Rückwandgruppen einander benachbarte Überbauregale mittels einer Tragvorrichtung 21 gehalten sind. So bildet die Überbauregalanordnung 2 eine Art Inselanordnung, die von zwei gegenüberliegenden Seiten zugänglich ist. Denkbar wäre auch die Anordnung der Überbauregale mit der Rückwandgruppe entlang einer Raumwand. Vorteilhaft können unterhalb der Überbauregale auch weitere Kühlvorrichtungen, insbesondere eine Kühltruhenanordnung oder auch eine flache Kühltheke oder dergleichen angeordnet sein.

Bei den einzelnen Kühlregalvorrichtungen 20 umschließt jeweils eine Einheit aus Wandgruppen 22 einen Kühlraum, wobei die Einheit eine Dachgruppe 22.1, eine Bodengruppe 22.3 und die Rückwandgruppe umfasst. Zusätzlich ist der Kühlraum auf beiden Seiten mit je einer Seitenwandgruppe 22.4 gegen die Umgebung abgegrenzt. Die Wandgruppen können dabei beispielsweise mehrschichtig ausgeführt sein und/oder darin bzw. daran angeordnete Elemente, wie z.B. Stützelemente und Tragestreben enthalten. Insbesondere zu Montagezwecken ist unterhalb der Bodengruppe, in Verlängerung des Verlaufs der Rückwandgruppe, über die Länge der Kühlregalanordnung ein Abdeckblech 25 angeordnet, welches z.B. zur Verbindung mit einer unterhalb der Kühlregalvorrichtung 20 angeordneten, weiteren Kühlvorrichtung dienen kann. Die Vorderseite des Kühlraums ist mit drei mit Griffen 24.1 versehenen Türen 24, vorzugsweise Glastüren, verschlossen. Die Türen 24 sind beispielsweise nach der Seite oder nach oben öffenbare Schwenktüren, könnten aber auch Schiebetüren sein. Sie bilden einen weitgehend dichten Abschluss des Kühlraums zu der wärmeren Umgebung. Die beschriebene Kühlregalvorrichtung 20 weist eine Länge zwischen 1,2 m und 3 m, vorzugsweise 1,4 m und 2,6 m auf sowie eine Höhe ohne Dachaufbauten zwischen 0,5 m und 1,5 m, vorzugsweise 0,8 m und 1,2 m (Höhe der Kühlregalvorrichtung 20 an sich, nicht Montagehöhe) und eine Tiefe zwischen 0,3 m und 0,9 m, vorzugsweise 0,5 m und 0,75 m.

Auf der Dachgruppe 22.1 ist zudem als Dachaufbau ein Aggregatgehäuse 23 angeordnet, in dem Komponenten der Kühleinrichtung 1 und ggf. weitere Komponenten enthalten sind. Solche Komponenten der Kühleinrichtung 1 können dabei insbesondere der oder die Verflüssiger 13, 13' mitsamt Wärmetauscher 13.1, 13.1' sein und/oder die Steuerungseinrichtung 15. Das Aggregatgehäuse 23 ist zurückversetzt und zu einer Seite hin auf der Dachgruppe 22.1 angeordnet, sodass eine seiner Seitenwände in etwa mit einer der Seitenwandgruppen 22.4 und dessen Rückwand etwa mit der Rückwandgruppe der Kühlregalvorrichtung 20 abschließt. Auf diese Weise ist das Aggregatgehäuse 23 aus einem Betrachterwinkel von vorne unauffällig, jedoch auch in der Überbauregalanordnung 2 gut zugänglich platziert.

Eine Verwendung der Kühlregalvorrichtung 20 als Überbauregal, wie in dem gezeigten Ausführungsbeispiel, hat sich als besonders geeignet herausgestellt, da es hierbei aufgrund der Anordnung naturgemäß zu größeren Schwankungen der benötigten Kühlleistung kommt als z.B. bei Kühltruhen oder auch nach vorne hin offenen Kühlregalen. Wird beispielsweise die Tür 24 zur Entnahme von Kühlgut aus dem Kühlraum geöffnet, "fließt" die schwerere, da kalte und damit dichtere Luft nach vorne aus dem Kühlraum, wobei warme Umgebungsluft zum Erhalt des Luftvolumens in den Kühlraum nachstömt. Diese muss nun auf Kühltemperatur abgekühlt werden, sodass sich die benötigte Kühlleistung momentan erhöht, bis die Luft abgekühlt ist. Längerfristige Kühlleistungsschwankungen ergeben sich beispielsweise dadurch, dass die zu kühlende Menge in der Kühlregalvorrichtung 20 über die Zeit bei der Entnahme von Kühlgut mehr und mehr abnimmt. Auf derartige Kühlleistungsschwankungen lässt sich gemäß der Erfindung, die zur Verfügung gestellte Kühlleistung über den in der Drehzahl regelbaren Kompressor 12' gezielt und kurzfristig einstellen, wodurch ein bedarfsoptimierter Betrieb der Kühleinrichtung erreichbar ist. Gleichzeitig wird gemäß der Erfindung ein quasi ständig benötigter Grundbedarf an Kälte über den Kältemittelkreislauf 10, 10' mit dem Kompressor 12 mit konstanter Drehzahl abgedeckt. So ergibt sich die benötigte Gesamt-Kälteleistung aus einem konstanten Anteil, der mit einem Kältemittelkreislauf 10 mit verhältnismäßig günstigem, da konstant betriebenen Kompressor 12 abdeckbar ist, und einem regelbaren Anteil dem mit drehzahlregelbaren Kompressor 12', der eine genaue, bedarfsweise Anpassung der Kühlleistung erlaubt. Bei dem in Figur 2 gezeigten Ausführungsbeispiel wird eine Kühlleistung zwischen 0,5 und 1,5 kW benötigt, sodass lediglich zwei Kältemittelkreisläufe mit jeweiligen Propan-Füllmengen ≤ 150 g zur Erbringung der Gesamt-Kühlleistung benötigt werden. Alles in allem wird so eine effiziente Kühlregalvorrichtung 20 erhalten, die mit Propan als Kältemittel klimaschonend und aufgrund ihrer Ausgestaltung flexibel und effizient betreibbar ist.

## Patentansprüche

1. Kühlregalvorrichtung (20) mit mindestens einer Einheit aus mehreren Wandgruppen, nämlich einer Bodengruppe (22.3), einer Rückwandgruppe und einer Dachgruppe (22.1), die einen Kühlraum unten, rückseitig und oben begrenzen, und mit einer Kühleinrichtung (1), die als Komponenten zumindest einen Verdampfer (11), einen Verflüssiger (13, 13') und eine elektrische Steuerungseinrichtung (15) sowie mindestens zwei geschlossene Kältemittelkreisläufen (10, 10') mit jeweils einem Kompressor (12,12') umfasst, wobei zur variablen Regelung der Kühlleistung mindestens ein Kompressor (12, 12') mit einer Drehzahlregelung ausgebildet ist und mindestens ein Kompressor (12, 12') zum Betrieb mit konstanter Drehzahl ausgebildet ist,
**dadurch gekennzeichnet,**
**dass** in den Kältemittelkreisläufen (10,10') Propan als Kältemittel geführt ist, wobei die Propan-Füllmenge der Kältemittelkreisläufe (10,10') jeweils ≤ 150 g beträgt, und dass ein ständig benötigter Grundbedarf an Kühlleistung mit dem Kompressor (12) mit konstanter Drehzahl abgedeckt ist und
**dass** für Kühlleistungsschwankungen die zur Verfügung gestellte Kühlleistung über den in der Kühlleistung regelbaren Kompressor eingestellt ist.

2. Kühlregalvorrichtung (20) nach Anspruch 1,
**dadurch gekennzeichnet,**
**dass** die Kältemittelkreisläufe (10, 10') einen gemeinsamen Verdampfer (11) aufweisen.

3. Kühlregalvorrichtung (20) nach einem der vorhergehenden Ansprüche,
**dadurch gekennzeichnet,**
**dass** die Kältemittelkreisläufe (10, 10') einen gemeinsamen Verflüssiger (13) und/oder eine gemeinsame elektrische Steuerungseinrichtung (15) zur Steuerung und/oder Regelung von den Kältekreislaufen (10, 10') zugeordneten Komponenten aufweisen.

4. Kühlregalvorrichtung (20) nach einem der vorhergehenden Ansprüche,
**dadurch gekennzeichnet,**
**dass** die elektrische Steuerungseinrichtung (15) zumindest mit dem mit der Drehzahlregelung versehenen Kompressor zur Regelung der Drehzahl in Datenübertragungsverbindung (15.1) steht.

5. Kühlregalvorrichtung (20) nach einem der vorhergehenden Ansprüche,
**dadurch gekennzeichnet,**
**dass** die Drehzahl in Abhängigkeit einer mit der Kühlregalvorrichtung (20) in Zusammenhang stehenden Temperatur geregelt oder regelbar ist.

6. Kühlregalvorrichtung (20) nach einem der vorhergehenden Ansprüche,
**dadurch gekennzeichnet,**
**dass** der Verflüssiger an, in oder auf der Rückwandgruppe oder der Dachgruppe (22.1) angeordnet ist.

7. Kühlregalvorrichtung (20) nach einem der vorhergehenden Ansprüche,
**dadurch gekennzeichnet,**
**dass** mindestens einer der Kompressoren (12, 12') und/oder die elektrische Steuerungseinrichtung in oder auf der Dachgruppe (22.1) angeordnet ist.

8. Kühlregalvorrichtung (20) nach einem der vorhergehenden Ansprüche,
**dadurch gekennzeichnet,**
**dass** der Verflüssiger einen mit Luft gekühlten Wärmetauscher aufweist, wobei die Luft nach Kühlung des Wärmetauschers vor Ausleitung aus der Kühlregalvorrichtung (20) an mindestens einem Kompressor (12, 12') zu dessen Kühlung vorbeigeführt ist.

9. Kühlregalvorrichtung (20) nach einem der vorhergehenden Ansprüche,
**dadurch gekennzeichnet,**
**dass** die Kühlregalvorrichtung (20) zum Verschließen des Kühlraums auf der der Rückwandgruppe gegenüberliegenden Vorderseite eine Tür (24) aufweist und seitlich von jeweils einer Seitenwandgruppe (22.4) begrenzt ist.

10. Kühlregalvorrichtung (20) nach einem der vorhergehenden Ansprüche,
**dadurch gekennzeichnet,**
**dass** die Kühlregalvorrichtung (20) aus mehreren, jeweils eine Einheit aus Wandgruppen aufweisenden Modulen besteht.

11. Verwendung einer Kühlregalvorrichtung (20) nach einem der vorhergehenden Ansprüche bei einer Kühlregalanordnung, die mindestens ein an einer Tragevorrichtung über dem Boden montierbares oder montiertes Kühlregal, insbesondere zum Überbau über einer auf dem Boden stehenden Kühltruhe, aufweist.

## Claims

1. A refrigerated display case (20) having at least one unit composed of a plurality of wall assemblies, namely a bottom assembly (22.3), a rear wall assembly, and a top assembly (22.1), which delimit a cooling space at the bottom, the rear, and the top, and having a cooling unit (1), whose components comprise at least one evaporator (11), one condenser (13, 13') and one electric control unit (15) as well as at least two closed refrigerant circuits (10, 10'), each with a compressor (12, 12'), wherein, for variably controlling the cooling output, at least one compressor (12, 12') is configured with a speed control, and at least one compressor (12, 12') is configured for operation at a constant speed, **characterized in that** propane is used as a refrigerant in the refrigerant circuits (10, 10'), wherein the propane capacity of the refrigerant circuits (10, 10') is ≤ 150 g each, and that a constantly required basic cooling output is covered by the compressor (12) with constant speed, and that, for covering fluctuations in the cooling output, the supplied cooling output is adjusted by means of the compressor that can control the cooling output.

2. The refrigerated display case (20) according to claim 1, **characterized in that** the refrigerant circuits (10, 10') have a common evaporator (11).

3. The refrigerated display case (20) according to one of the previous claims, **characterized in that** the refrigerant circuits (10, 10') have a common condenser (13) and/or a common electric control unit (15) for controlling and/or regulating components assigned to the refrigerant circuits (10, 10').

4. The refrigerated display case (20) according to one of the previous claims, **characterized in that** the electric control unit (15) is connected via a data-transmission connection (15.1) at least to the compressor provided with the speed control in order to control the speed.

5. The refrigerated display case (20) according to one of the previous claims, **characterized in that** the speed is controlled or controllable on the basis of a temperature associated with the refrigerated display case (20).

6. The refrigerated display case (20) according to one of the previous claims, **characterized in that** the condenser is arranged against, in, or on the rear wall assembly or the top assembly (22.1).

7. The refrigerated display case (20) according to one of the previous claims, **characterized in that** at least one of the compressors (12, 12') and/or the electric control unit is arranged in or on the top assembly (22.1).

8. The refrigerated display case (20) according to one of the previous claims, **characterized in that** the condenser has an air-cooled heat exchanger, wherein, after having cooled the heat exchanger and before being guided out of the refrigerated display case (20), the air is guided past at least one compressor (12, 12') in order to cool said compressor.

9. The refrigerated display case (20) according to one of the previous claims, **characterized in that**, on a front side opposite from the rear wall assembly, the refrigerated display case (20) has a door (24) for closing the cooling space and is delimited by a respective side wall assembly (22.4) on each side.

10. The refrigerated display case (20) according to one of the previous claims, **characterized in that** the refrigerated display case (20) is composed of a plurality of modules, each having one unit of wall assemblies.

11. A use of a refrigerated display case (20) according to one of the previous claims in a refrigerated display case arrangement that has at least one refrigerated display case that can be installed or is installed on a support device above the floor, particularly for installation above a deep freezer resting on the floor.

## Revendications

1. Système d'étagère réfrigérante (20) comprenant au moins une unité composée de plusieurs groupes de parois, notamment un groupe formant fond (22.3), un groupe formant paroi arrière et un groupe formant paroi de recouvrement (22.1), qui délimitent un espace frigorifique en bas, côté arrière et en haut, et un dispositif de refroidissement (1), qui comprend comme composants au moins un évaporateur (11), un condensateur (13, 13') et un dispositif de commande (15) électrique ainsi qu'au moins deux circuits frigorifiques (10, 10') fermés sont dotés chacun d'un compresseur (12, 12'), dans lequel au moins un compresseur (12, 12') est conçu avec une régulation de vitesse pour assurer une régulation variable de la puissance de refroidissement et au moins un compresseur (12, 12') est conçu pour fonctionner à une vitesse constante,
**caractérisé en ce que**
du propane est acheminé comme fluide frigorigène dans les circuits frigorifiques (10, 10'), dans lequel la quantité de remplissage en propane des circuits frigorifiques (10, 10') est respectivement ≤ 150 g, et **en ce qu'**un besoin de base constant en puissance de refroidissement est couvert par le compresseur (12) à vitesse constante,
et **en ce que**, pour les fluctuations de la puissance de refroidissement, la puissance de refroidissement mise à disposition est réglée par l'intermédiaire du compresseur qui peut être réglé en ce qui concerne la puissance de refroidissement.

2. Système d'étagère réfrigérante (20) selon la revendication 1,
**caractérisé en ce que**
les circuits frigorifiques (10, 10') comportent un évaporateur (11) commun.

3. Système d'étagère réfrigérante (20) selon l'une des revendications précédentes, **caractérisé en ce que**
les circuits frigorifiques (10, 10') comportent un condensateur (13) commun et/ou un dispositif de commande (15) électrique commun pour commander et/ou réguler les composants associés aux circuits frigorifiques (10, 10').

4. Système d'étagère réfrigérante (20) selon l'une des revendications précédentes,
**caractérisé en ce que**
le dispositif de commande (15) électrique est en liaison de transmission de données (15.1) au moins avec le compresseur muni de la régulation de vitesse pour la régulation de la vitesse.

5. Système d'étagère réfrigérante (20) selon l'une des revendications précédentes,
**caractérisé en ce que**
la vitesse est réglée ou peut être réglée en fonction d'une température liée au système d'étagère réfrigérante (20).

6. Système d'étagère réfrigérante (20) selon l'une des revendications précédentes,
**caractérisé en ce que**
le condenseur est disposé au niveau du groupe formant paroi arrière ou du groupe formant paroi de recouvrement (22.1) ou dans ceux-ci.

7. Système d'étagère réfrigérante (20) selon l'une des revendications précédentes,
**caractérisé en ce**
**qu'**au moins l'un des compresseurs (12, 12') et/ou le dispositif de commande électrique est disposé dans le groupe formant paroi de recouvrement (22.1) ou sur celui-ci.

8. Système d'étagère réfrigérante (20) selon l'une des revendications précédentes,
**caractérisé en ce que**
le condenseur comporte un échangeur de chaleur refroidi par air, dans lequel l'air, après avoir refroidi l'échangeur de chaleur, est conduit devant au moins un compresseur (12, 12') pour le refroidir avant d'être évacué du système d'étagère réfrigérante (20).

9. Système d'étagère réfrigérante (20) selon l'une des revendications précédentes,
**caractérisé en ce que**
le système d'étagère réfrigérante (20) destiné à fermer l'espace réfrigéré comporte une porte (24) sur le côté avant opposé au groupe formant paroi arrière et est délimité latéralement par un groupe de parois latérales (22.4) respectives.

10. Système d'étagère réfrigérante (20) selon l'une des revendications précédentes,
**caractérisé en ce que**
le système d'étagère réfrigérante (20) est constitué de plusieurs modules comprenant chacun une unité de groupes de parois.

11. Utilisation d'un système d'étagère réfrigérante (20) selon l'une des revendications précédentes dans un agencement d'étagères réfrigérantes comprenant au moins une étagère réfrigérante montée ou pouvant être montée sur un dispositif de support au-dessus du sol, en particulier pour la superposition au-dessus d'un réfrigérateur posé sur le sol.
